# EUROPEAN PATENT SPECIFICATION

(11) **EP 4 169 275 B1**
(45) Date of publication and mention of the grant of the patent: **22.04.2026**
(21) Application number: 20942174.2
(22) Date of filing: 22.06.2020
(51) Int. Cl.: H04W 8/08, H04W 28/08, H04B 7/155, H04W 36/12, H04W 92/20

(54) **PROCESSING OF DATA TRAFFIC IN INTEGRATED ACCESS AND BACKHAUL (IAB) COMMUNICATION NETWORKS**
VERARBEITUNG VON DATENVERKEHR IN KOMMUNIKATIONSNETZWERKEN MIT INTEGRIERTEM ZUGANG UND BACKHAUL (IAB)
TRAITEMENT DE TRAFIC DE DONNÉES DANS DES RÉSEAUX DE COMMUNICATION DE LIAISON TERRESTRE À ACCÈS INTÉGRÉ (IAB)

(43) Date of publication of application: 26.04.2023
(73) Proprietor: Telefonaktiebolaget LM ERICSSON (PUBL), 16483 Stockholm (SE)
(72) Inventor: RONKAINEN, Henrik, 247 33 Södra Sandby (SE); ÖSTBERG, Christer, 245 44 Staffanstorp (SE)
(74) Representative: Ericsson
(86) International application number: PCT/SE2020/050641
(87) International publication number: WO 2021/262045

(56) References cited:
- WO-A1-2019/086719
- WO-A1-2019/192607
- WO-A1-2019/216717
- WO-A1-2020/051588
- WO-A1-2020/061530
- WO-A1-2020/087445
- INTEL CORPORATION: "On RAN architecture for IAB relaying in NR", 3GPP DRAFT; R3-181351_IAB_ARCHITECTURE_V3_1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20180226 - 20180302, 16 February 2018 (2018-02-16), Mobile Competence Centre ; 650, route des Lucioles ; F-06921 Sophia-Antipolis Cedex ; France , XP051401582
- QUALCOMM INCORPORATED ET AL.: "IAB topology adaptation for architecture 1a", 3RD GENERATION PARTNERSHIP PROJECT (3GPP, 10 August 2018 (2018-08-10), XP051528040, Retrieved from the Internet <URL:http://www.3gpp.org/ftp/tsg%5Fran/WG3%5FIu/TSGR3%5F101/Docs/R3%2D184693%2Ezip>
- "3rd Generation Partnership Project; Technical Specification Group Services and System Aspects; System architecture for the 5G System (5GS); Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.4.0, 27 March 2020 (2020-03-27), Mobile Competence Centre ; 650, route des Lucioles ; F-06921 Sophia-Antipolis Cedex ; France , pages 1 - 430, XP051861090

## Description

### TECHNICAL FIELD

The present invention relates to methods and apparatuses involving the field of wireless communication networks, and more specifically to integrated access and backhaul (IAB) communication networks.

### BACKGROUND

Wireless mobile communication technology uses various standards and protocols such as the 3rd Generation Partnership Project (3GPP) fifth-generation (5G), to transmit data between a base station and a wireless mobile device or generally referred to as a user equipment (UE). The 5G cellular wireless network architecture for example, can consist of a next generation radio access network (NG-RAN) and a 5G core network (5G CN).

The NG-RAN can include a set of gNodeB's (gNBs) connected to the 5GC via one or more NG interfaces, whereas the gNBs can be connected to each other via one or more Xn interfaces.

The radio technology for the NG-RAN is often referred to as "New Radio" (NR). By exploiting the advantages offered by the 5G communication systems and to satisfy the increasing demand for bandwidth and/or capacity in mobile networks, e.g. driven by the increasing use of video streaming services, expansion of deployment of base stations is one of the mechanisms that can be employed. Specifically, due to the availability of more spectrum in the millimetre wave (mmw) band, deploying small cells that operate in this band is an attractive deployment option for these purposes. However, the normal approach of connecting the small cells to the operator's backhaul network with optical fiber can end up being very expensive and impractical. Employing wireless links for connecting the small cells to the operator's network is a cheaper and more practical alternative. One such approach is an integrated access backhaul (IAB) networks where the operator can utilize part of the radio resources for the backhaul link. IAB has been studied earlier in 3GPP in the scope of Long Term Evolution (LTE) Rel-10. In that work, an architecture was adopted where a Relay Node (RN) has the functionality of an LTE eNB and UE modem. For 5G-NR, similar options utilizing IAB can also be considered.

One difference compared to LTE is the application of a split structure in NG RAN logical nodes, described in more detail below, as well as support of multiple IAB hops and redundant paths.

The NG RAN logical nodes generally include a Central Unit (CU or gNB-CU) and one or more Distributed Units (DU or gNB-DU), detailed explanation of which can e.g. be found in "NG-RAN, Architecture Description, 3GPP TS 38.401 ver 15.3.0". The CU is a logical node that is a centralized unit that hosts higher-layer protocols and includes several gNB functions, including controlling the operation of DUs. A DU however, is a decentralized logical node that hosts lower-layer protocols and can include, depending on the functional split option, various subsets of the gNB functions. The gNB-CU connects to gNB-DUs over respective F1 logical interfaces. The gNB-CU and connected gNB-DUs are only visible to other gNBs and the 5GC as a gNB, e.g., the F1 interface is not visible beyond gNB-CU.

It has also been agreed in 3GPP RAN3 Working Group to support a separation of the gNB-CU into a CU-Control Plane (CU-CP) function (including radio resource control (RRC) and packet data convergence protocol (PDCP) for signalling radio bearers) and CU-User Plane (CU-UP) function (including PDCP for user plane). The CU-CP and CU-UP parts communicate with each other using the EI-AP protocol over the E1 interface. In the gNB split CU-DU architecture, a UE can connect to multiple DUs served by the same CU or a UE can connect to multiple DUs served by different CUs. Basically, a gNB can include a gNB-CU connected to one or more gNB-DUs via respective F1 interfaces, or a gNB-DU can be connected to only a single gNB-CU.

However, the gNB-CU/DU split structure can create certain difficulties in IAB networks; more specifically, in multi-hop IAB architectures with cascading of processing of protocols within the IAB nodes. Furthermore, deploying multiple IAB nodes using the access spectrum also for backhaul communication dictates that the number of nodes/hops are limited, as IAB nodes cannibalize their own access spectrum for transfer of backhaul traffic. A typical problem which can arise in this scenario is that the hop receiving the backhaul traffic from all the nodes further down in the hop cascade becomes overloaded, which in turn leads to high latency issues and congestions in the IAB network.

Therefore, there is a need in the field of IAB communication networks to devise more robust and efficient IAB network architectures capable of meeting the demands for the ever-increasing bandwidth and latency demands for processing and communication of massive amounts of data.

A known method is described in WO 2019/086719 A1 which relates to policy-driven local offload of selected user data traffic at a mobile edge computing data platform.

### SUMMARY

It is an object of the present disclosure to set forth methods and nodes for addressing these and other problems in IAB communication networks.

These objects are achieved by means of several aspects of the present invention which is defined in the appended claims.

In a first aspect, the present disclosure provides a method for a local breakout, performed in a first network node of an integrated access and backhaul (IAB) network being in communication with a core network. The method comprises providing a network connection between the first network node and a local data network having a first network address, receiving a data traffic, transmitted by a user equipment (UE) the data traffic destined for a central application server having a second network address and being in communication with the core network. If said data traffic meets a requirement for the local breakout from the first network node, the method comprises forwarding the data traffic to a local application server of the local data network, receiving, from the application server of the local data network, a selected part of the data traffic destined for the central application server, the selected part of the data traffic having been processed and formed by the local application server of the local network, and transmitting, the selected part of the data traffic to the central application server, whereby mitigating data traffic overload of the IAB network.

In a second aspect, a first network node of an IAB network being in communication with a core network is provided and configured to perform the method of the first aspect. The first network node comprises a memory comprising instruction data representing a set of instructions. The first network node also comprises processing circuitry configured to communicate with the memory and to execute the set of instructions, the processing circuitry being operable to establish a network connection between the first network node and a local data network having a first network address. The processing circuitry is further operable to receive a data traffic, transmitted by a UE, the data traffic destined for a central application server having a second network address and being in communication with the core network. The processing circuitry is further configured to, if the data traffic meets a requirement for a local breakout from the first network node, forward, the data traffic to a local application server of the local data network, receive, from the local application server of the local data network, a selected part of the data traffic destined for the central application server, the selected part of the data traffic having been processed and formed by the local application server of the local network, and to transmit, the selected part of the data traffic to the central application server.

According to a third aspect of the present disclosure, there is provided a method in a local application server. The local application server has a first network address and is in communication with a first network node of an IAB communication network. The method comprises transmitting, to a central application server having a second network address and being in communication with a core network, an information of the local application server. The method comprises receiving, via the first network node, receiving, a data traffic, transmitted by a UE, wherein the data traffic meets a requirement for a local breakout from the first network node. The method comprises processing the received data traffic and forming a selected part of the data traffic based on the processing, and forwarding via the first network node, the selected part of the data traffic destined for the central application server to the central application server.

According to an fourth aspect of the present disclosure, there is provided a local application server configured to perform the method of the seventh aspect. The local application server has a first network address, and is in communication with a first network node of an IAB communication network. The local application server comprises a memory comprising instruction data representing a set of instructions. The local application server comprises processing circuitry configured to communicate with the memory and to execute the set of instructions. The processing circuitry is operable to transmit, to a central application server having a second network address and being in communication with a core network, an information of the local application server. The processing circuitry is further operable to receive via the first network node, a data traffic, transmitted by a UE, wherein the data traffic meets a requirement for a local breakout from the first network node. The processing circuitry is further operable to process the received data traffic and form a selected part of the data traffic based on the processing, and to forward via the first network node, the selected part of the data traffic destined for the central application server to the central application server.

Various aspects of the present disclosure provide methods and nodes and computer programs for efficiently performing a local breakout in the IAB network and thus provide the advantage of mitigating data traffic overload of the IAB network. Accordingly, a robust and efficient IAB network architecture capable of meeting the demands for high bandwidth and low latency for processing and communication of massive amounts of data is achieved.

### BRIEF DESCRIPTION OF THE DRAWINGS

- Figure 1: shows a schematic diagram of an integrated access and backhaul (IAB) network according to embodiments of the present disclosure;
- Figure 2: shows a network connection in the IAB network according to several embodiments of the present disclosure;
- Figure 3: illustrates a flowchart of a method according to embodiments of the present disclosure;
- Figure 4: illustrates a flowchart of another method which is not part of the present invention;
- Figure 5: illustrates a flowchart of another method which is not part of the present invention;
- Figure 6: illustrates a flowchart of yet another method according to embodiments of the present disclosure;
- Figures 7a-b: show block diagrams of different protocol data unit (PDU) session selection according to embodiments of the present disclosure;
- Figures 8-9: illustrate sequence block diagrams of two example scenarios with reference to the PUD session selection of figures 7a-b according to embodiments of the present disclosure;
- Figure 10: shows an example communication network comprising the IAB network according to embodiments of the present disclosure;
- Figures 11-14: show schematic block diagrams of several network entities according to embodiments of the present disclosure.

### DETAILED DESCRIPTION

Aspects and various embodiments of the present disclosure will now be described more fully hereinafter with reference to the accompanying drawings. The different devices, systems, computer programs and methods disclosed herein can, however, be realized in many different forms and should not be construed as being limited to the aspects and embodiments set forth herein. Like numbers in the drawings refer to like elements throughout.

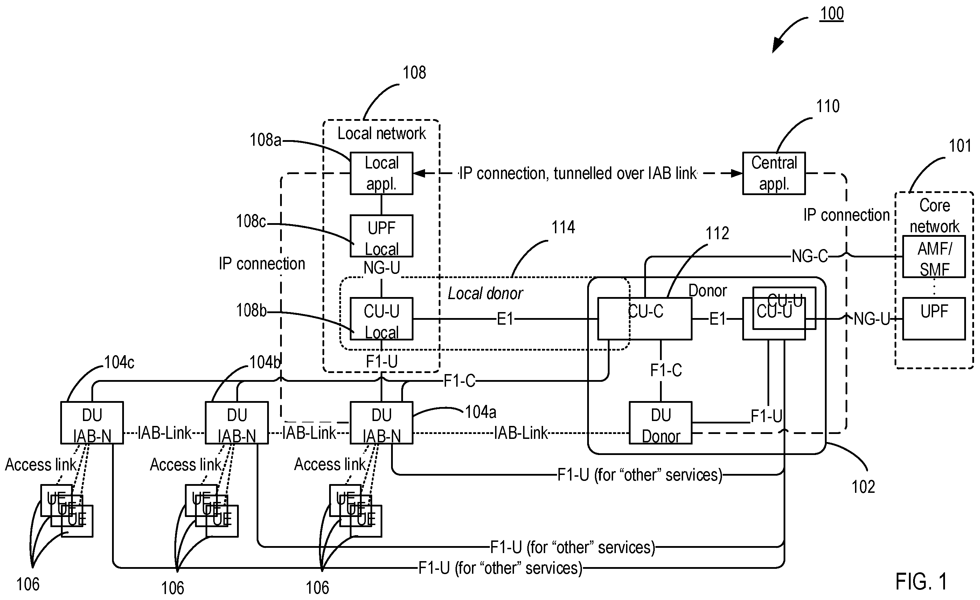

Figure 1 shows an integrated access and backhaul (IAB) network 100 according to some embodiments of the present disclosure. The IAB network 100 may be configured to operate according to specific standards or other types of predefined rules or procedures. Thus, particular embodiments of the IAB network 100 may implement communication standards, such as Long Term Evolution (LTE), and/or other suitable 2G, 3G, 4G, or 5G standards; and/or any future developments of other appropriate wireless communication standards and communication network architectures.

The IAB network 100 comprises an IAB donor 102, a plurality of IAB nodes 104a, 104b, 104c (collectively 104) and a plurality of wireless devices 106 for example a plurality of user equipments, UEs, 106.

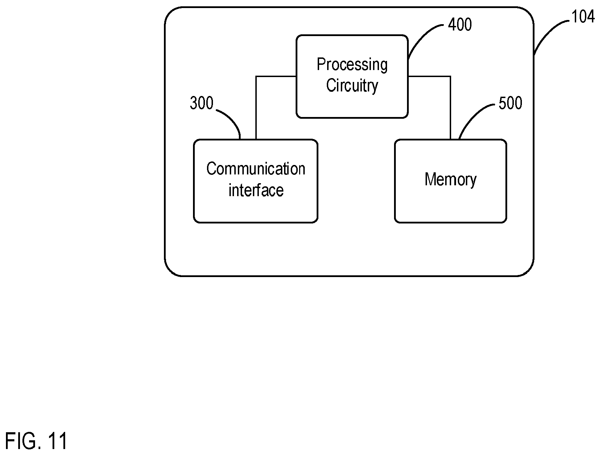

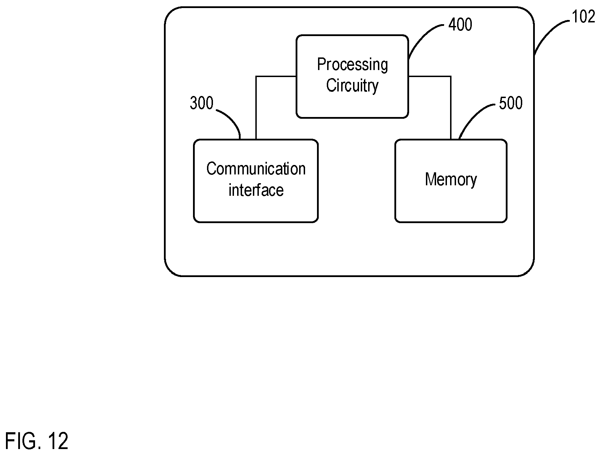

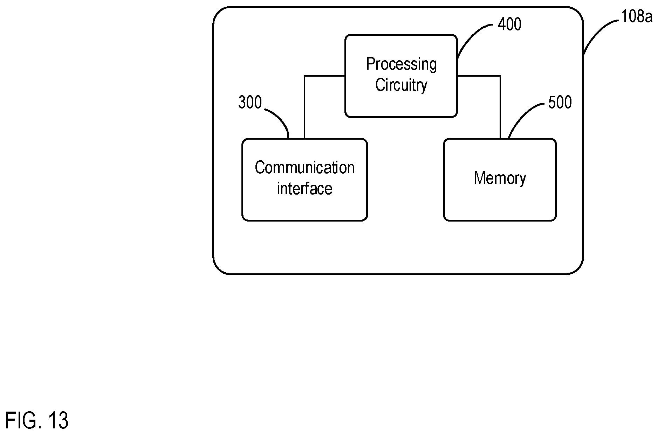

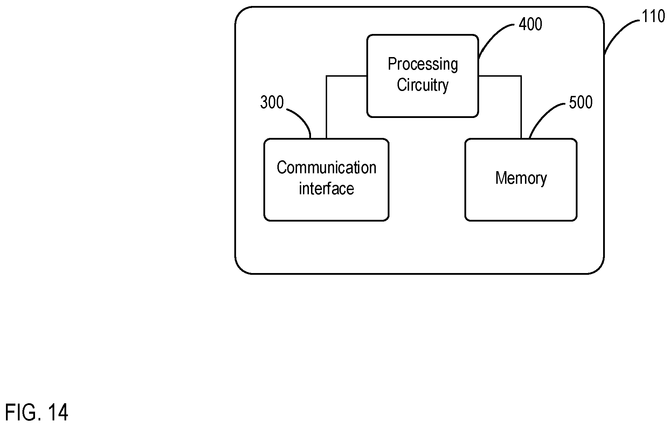

Generally, the network entities also referred to as network nodes in the context of the present disclosure may comprise any component or network function (e.g. any hardware or software module) in the communications network suitable for performing the functions described herein. For example, a node may comprise equipment capable, configured, arranged and/or operable to communicate directly or indirectly with a UE e.g. a wireless device and/or with other network nodes or equipment in the communications network to enable and/or provide wireless or wired access to the UE and/or to perform other functions (e.g., administration) in the communications network. The network nodes, e.g. the IAB nodes 104, the donor node 102 and/or any other network node, e.g. a central application server 110 and/or a local application server 108a, may comprise communication interfaces 300 e.g. as shown in figures 11-14. The communication interfaces may in some aspects include transmitting and receiving units configured to establish network communication and send and/or receive data traffic to/from the other nodes and/or functions in the network. The communication interfaces 300, may include software and/or hardware modules which may be separately deployed and/or alternatively comprised in a processing circuitry 400 as described in the context of this disclosure and shown e.g. in figures 11-14. The network entities may comprise storage mediums e.g. a memory 500 as shown in figures 11-14. Examples of nodes include, but are not limited to, access points (APs) (e.g., radio access points), base stations (BSs) (e.g., radio base stations, Node Bs, evolved Node Bs (eNBs) and NR NodeBs (gNBs)). Further examples of nodes include but are not limited to core network functions such as, for example, core network functions in 5G core network. Various embodiments of the present invention are to be described in the following with respect to the network functions of a 5G core network 101 and 5G RAN as a non-limiting example.

The IAB network 100 has a gNB split CU-DU architecture as supported in 3GPP RAN3 Working Group with separation of the gNB-CU into a CU-CP function (including RRC and PDCP for signalling radio bearers) and CU-UP function (including PDCP for user plane). The IAB nodes 104 are equipped with a mobile termination (MT) functionality that terminates the radio interface layers of the backhaul Uu interface toward its upstream IAB node.

The IAB donor node 102, may comprise equipment capable, configured, arranged and/or operable to communicate directly or indirectly with one or more IAB nodes 104 in the IAB network 100. The IAB donor node 102 may additionally comprise equipment capable, configured, arranged and/or operable to communicate directly or indirectly with one or more core network nodes. The IAB donor 102 may be a base station, for example, a radio base station, a Node B, an evolved Node Bs (eNB) or a New Radio (NR) NodeBs (gNB). The IAB donor 102 may be connected to a core network 101 and may thus provide an interface between the IAB network 100 and the core network 101. For example, the IAB donor 102 may connect the plurality of IAB nodes 104 to the core network 101. The IAB donor 102 may comprise an IAB donor according to the definition in the Third Generation Partnership Project (3GPP). For example, the IAB donor 102 may comprise a radio access node (RAN node) which provides a UE's interface to the core network 101 and wireless backhauling functionality to IAB-nodes. Generally, the IAB donor 102 may provide backhauling (e.g. wireless backhauling) for the IAB nodes 104 in the IAB network 100. The IAB donor 102 may also provide an interface between one or more UEs 106 in the IAB network 100 and the core network 101. The one or more UEs 106 may be connected directly to the IAB donor 102 or indirectly to the IAB donor 102 via one or more IAB nodes 104 in the IAB network 100.

The donor node 102 may comprise processing circuitry (or logic). It will be appreciated that the donor node 102 may comprise one or more virtual machines running different software and/or processes. The donor node 102 may therefore comprise one or more servers, switches and/or storage devices and/or may comprise cloud computing infrastructure or infrastructure configured to perform in a distributed manner that runs the software and/or processes.

The processing circuitry can comprise one or more processors, processing units, multi-core processors or modules that are configured or programmed to control the donor node 102 in the manner described herein. In particular implementations, the processing circuitry may comprise a plurality of software and/or hardware modules that are each configured to perform, or are for performing, individual or multiple steps of the functionality of the donor node 102 as described herein.

The donor node 102 may comprise a memory. In some embodiments, the memory of the node 102 can be configured to store program code or instructions (e.g. instruction data representing a set of instructions) that can be executed by the processing circuitry of the donor node 102 to perform the functionality described herein. Alternatively or in addition, the memory of the donor node 102, can be configured to store any requests, resources, information, data, signals, or similar transmitted by any one of the UEs, other IAB nodes 104 and/or the core network 101 functions that are described herein. The processing circuitry of the donor node 102 may be configured to control the memory to store any requests, resources, information, data, signals, or similar that are described herein.

In some embodiments, the donor node 102 may comprise a communications interface. The communications interface may be for use in communicating with other nodes in the communications network, (e.g. such as other physical or virtual nodes). For example, the communications interface may be configured to transmit to and/or receive from other IAB nodes 104 or network function requests, resources, information, data, signals, or similar. The communication interface may be an F1-C and/or F1-U and/or E1 interface or any other interfaces in accordance with 5G RAN. For example, the donor node 102 in figure 1 has a wired connection to the core network 101 functions, e.g. access and mobility management function (AMF) for the control plane via NG-C as N2 interface and to user plane function (UPF) for the user plane via NG-U as N3 interface.

The processing circuitry of the donor node 102 may be configured to control such a communications interface to transmit to and/or receive from other IAB nodes 104 or core network 101 functions requests, resources, information, data, signals, or similar.

It should be appreciated that the skilled person will readily understand the above components, network functions, interfaces and hardware and/or software equipment described with respect the IAB donor node 102 can also be deployed in any other node e.g. in one or more of the IAB nodes 104 of the IAB network 100. Thus, each IAB node 104 may comprise a memory and processing circuitry. The memory of the node 104 can be configured to store program code or instructions (e.g. instruction data representing a set of instructions) that can be executed by the processing circuitry of the IAB node 104 to perform the functionalities described herein.

In several embodiments of the present disclosure, the IAB nodes 104 may be base stations such as, for example, radio base stations, Node Bs, eNBs or gNBs. Each of the IAB nodes 104 may be in communication with one or more UEs 106 in the IAB network 100, thereby providing network access for the UEs 106. The skilled person will also appreciate that nodes in the IAB network 100 may, in general, comprise one or more antennas. Therefore, each of IAB nodes 104 along the IAB data traffic link may comprise any number of antennas.

In the illustrated embodiment in figure 1, the IAB network 100 comprises a first IAB node 104a, a second IAB node 104b and a third IAB node 104c, although the skilled person will appreciate that the IAB network 100 may, in general, comprise a plurality of IAB nodes 104 and may, for example, comprise many more IAB nodes 104 than those shown in figure 1. It is to be understood that the term first, second, third, etc. may be used herein to describe various elements. These elements should not be limited by these terms, since this is rather to distinguish such elements from one another. For example, the first network node 104 in the context of the present disclosure may be any of the first IAB node 104a, the second IAB node 104b or the third IAB node 104c or any of the plurality of the IAB nodes 104 in the IAB network 100. In the rest of this text and the described examples below, the first network node 104 may also be referred to as the first IAB node 104a only for the sake of convenience.

Each of the IAB nodes 104 may be connected to the IAB donor 102, either directly (e.g. via a link between the respective IAB node 104 and the IAB donor 102) or via one or more other IAB nodes 104 in the IAB network 100. The links (otherwise known as "hops") between IAB nodes 104, and links between the IAB donor 102 and any IAB nodes 104 may be wireless links. The IAB nodes 104 may have other connections and interfaces towards other IAB nodes 104 and/or the IAB donor node 102 such as F1-C, and/or F1-U interfaces.

UEs 106 in the IAB network 100 of figure 1 are connected to the core network 101 via one or more IAB nodes 104 and the IAB donor 102. The UEs 106 may send data (uplink, UL, data traffic) to the core network 101 via the first IAB node 104a and the IAB donor 102, or via the second and third IAB nodes 104b, 104c and the IAB donor 102. Similarly, the IAB donor node 102 may send data (downlink, DL, data traffic) to the UEs 106 via the first IAB node 104a, or via the second and third IAB nodes 104b, 104c. In addition, there may be different methods for transmitting data along the IAB network 100. Data transmission towards the IAB donor 102 may be considered as UL and transmission form the IAB donor 102 may be considered as DL.

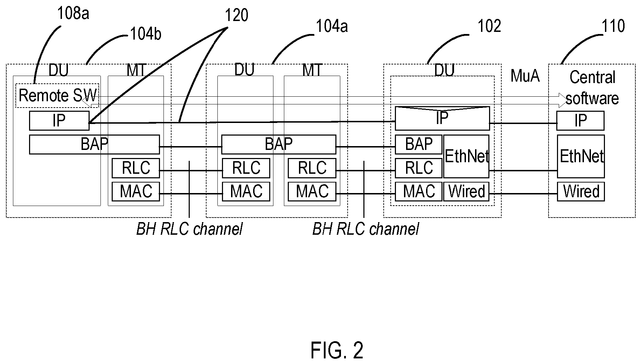

An advantage of the IAB network 100 according to the present disclosure is to enable deploying higher layer functions in any selected IAB node of the IAB nodes 104 in the IAB network 100. The advantages are thus achieved by the combination of using IAB nodes 104, wherein the air interface is employed to carry the backhaul traffic in addition to the access traffic of the UEs, and utilizing an internet protocol (IP) connectivity 120 among the IAB nodes 104 which in some aspects are tunnelled over the IAB communication links, using hop-by-hop data forwarding enabled by the Backhaul Adaptation Protocol (BAP). The BH RLC channel as shown in figure 2 handles the air interface between the IAB nodes 104, details of which is described in 3GPP TS 38.300 V16.1.0.

Thus, by using the IP connectivity it is possible to deploy non-DU/IAB software (remote software 108a) in selected IAB nodes 104 e.g. the first IAB node 104a in figure1 and the second IAB node 104b in figure 2, or possibly connect other collocated equipment in the selected IAB nodes 104a, 104b. The non-DU/IAB software using IP connectivity and deployed in the IAB nodes 104 can be any type of software application, including software which are normally a part of the donor node 102 or the core network 101. (only two IAB nodes 104a and 104b have been shown as an example in figure 2)

The IAB network 100 further comprises a local data network 108 which has a first network address. The local data network 108 is located remotely from a central application server 110 and may thus in this disclosure be exchangeably referred to as the remote data network 108. The IAB network 100 in several embodiments is a multi-hop IAB communication network having at least two IAB nodes 104, wherein each IAB node is connected to at least one other IAB node, and such that data traffic is forwarded from each IAB node to the at least one other IAB node and wherein at least one IAB node is in communication with the local data network 108.

The local data network 108 is in some embodiments at least partly collocated with one of the IAB nodes 104, e.g. the first IAB node 104a. The IAB nodes 104 comprise at least one base station distributed unit, gNB-DU. The local data network 108 is configured to handle collection of data of the UEs 106, and comprises a local application server 108a, a locally arranged central unit-user plane, CU-UP, 108b and a local user plane function, UPF 108c. In some embodiments, the local application server 108a of the local data network 108 is collocated with the first IAB node 104a. The gNB-DU of the first IAB node 104a is connected to the local/remote CU-UP 108b via a F1-U interface. The local CU-UP 108b is connected to the local/remote UPF 108c via a NG-U interface.

By means of the above arrangement of the local data network 108 a local breakout of the UE data traffic which e.g. is destined for the central application server 110 is enabled. The local breakout provides that the data traffic associated with a certain set of applications is terminated in the local data network 108 and more specifically in the local application server 108a. The local breakout provides the possibility to process the received UE data traffic with a very short latency from the time it is transmitted by the UE.

To perform the local breakout according to embodiments of the present invention, the CU-UP 108b and UPF 108c function of the local data network 108 are directly connected to the DU in the first IAB node 104a. The centrally located CU-CP 112 of the donor node 102 configures the CU-UP 108b of the local data network 108 via an E1 interface (local donor 112) and paths (not shown) from the functions of the core network 101 to the UPF 108c. The local breakout is thus achieved wherein the connections from the central CU-CP 112 of the donor node 102, the central application 110 and core network 101 functions (AMF/SMF, UPF, etc.) to the remote functional entities (the local application server 108a, CU-UP 108b, and UPF 108c) are carried over the IAB-backhaul link(s). This provides the opportunity to decrease the latency, reduce the overall bandwidth requirements and avoid trombone effect for services that can be processed locally in the local data network 108. The remote 108a and the central applications 110 are connected via an IP connection which in this deployment is tunnelled over the IAB-link.

After the local breakout and processing of UE traffic in the local data network 108, by utilizing the IAB network 100, the processed data is forwarded to the central application server 110 for further processing, storage and/or e.g. broadcasting.

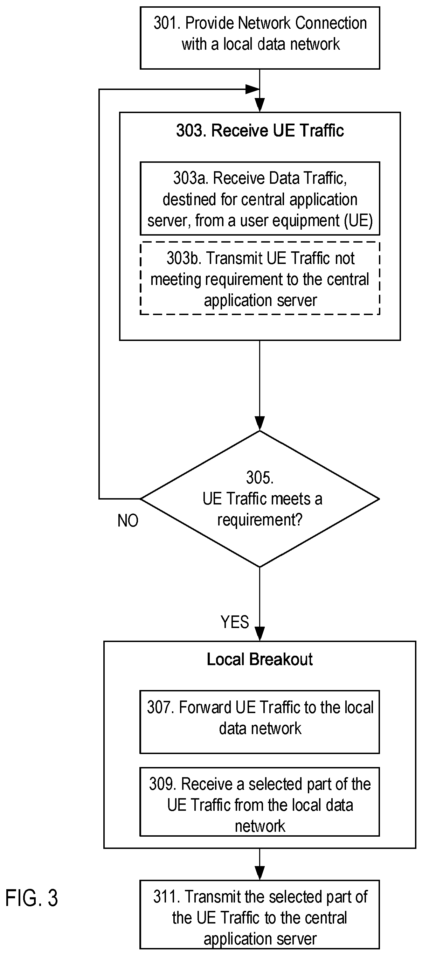

Figure 3 shows a flowchart of a method in a first network node 104 of an IAB network for a local breakout according to embodiments of the present invention. The IAB network may be the IAB network 100 described above with respect to figures 1 and 2. The first network node 104 may be the first IAB node 104a of the plurality of IAB nodes 104 in the embodiment of figure 1 or any other selected and suitable IAB node 104 in the IAB network 100. Generally, and unless stated otherwise, embodiments of the methods in the present disclosure apply to both UL transmissions i.e. transmissions from the UEs 106 to the IAB donor 102/central application server 110 as well as DL transmissions i.e. transmissions from the IAB donor 102/central application server 110 to the UEs 106). Similarly, the embodiments of the methods generally apply to the nodes and entities comprised in the IAB network 100, core network 101, central application 110, local data network 108 and/or any other physical or virtual nodes in the communication network including the entities discussed above with respect to figures 1 and 2.

The method for the local breakout, performed in the first network node e.g. the first IAB node 104a of the IAB network 100 comprises providing in step 301 a network connection between the first IAB node 104a and the local data network 108 having a first network address. By providing network connection it is meant here that the remote functions including local UPF 108c and CU-UP 108b as well as the local application server 108a start up and become operably connected to the first network node e.g. the first IAB node 104a of the radio access communication network. The network address of the local data network is in some embodiments an IP address. The local application server 108a of the local data network 108 may establish network connection using dynamic host configuration protocol (DHCP) or any other known telecommunication technology. The local application server 108a has the first network address. It should be appreciated that in the context of the present disclosure, the first network address can be used both for the local data network 108 and the application server 108a of the local data network. The remote/local entities including CU-UP 108b and UPF 108c as well as the central application server 110 establish network connection in similar ways as above. Any other wired node in the IAB network 100 also establishes network connection. In some aspects the network connection is forwarded over the IAB links in the IAB network 100. Also, by establishing network connection it is meant that the remote/local entities, local application server and/or other network entities operably connect to the radio access communication network.

In step 303 the method comprises receiving a data traffic, transmitted by one or more UEs 106, wherein the data traffic is destined for the central application server 110 having a second network address and being in communication with the core network 101. The UE devices 106 establish network connection to the first IAB node 104a directly or to any other IAB node 104 in the IAB network e.g. by using RRC connections. The second network address of the central application server is in several embodiments an IP address.

The local data network 108 and the central application server 110 may connect and communication via the first and second IP addresses. For example, in several embodiments the local application server 108a has an IP connection to the central application server 110 which is tunnelled over an IAB communication link. This way the local application server 108a can notify its presence to the central application. Provide its IP address as well as e.g. its geographical location information and/or any other information required by the central application server 110. In some aspects, the local application server 108a and the central application server 110 establish network connection and communicate using a name server or any other known technology in the field. In step 305, if the UE data traffic meets a requirement for the local breakout from the first IAB network node 104a the method further comprises forwarding in step 307, the UE data traffic to the local application server 108a of the local data network 108. In some embodiments the step 303 of receiving the UE data traffic may further comprise receiving the UE data traffic in step 303a and if the UE data traffic is found not to meet the requirement of step 105, the UE traffic is forwarded in step 303b to the central application server 110. In some other aspects, any previously buffered or prepared DL data traffic pending for the UE 106 which has established the network connection may be forwarded to that UE 106. In step 309, a selected part of the data traffic which is destined for the central application server 110 and was forwarded to the local application server 108 is received from the application server 108a of the local data network 108. The IAB node 104a is configured to forward the data traffic to the local application server 108a via a first data path. The first data path may comprise a F1-user plane, F1-UP, interface. The IAB node 104a is further configured to receive the selected part of the data traffic from the local application server via a second data path. The second data path may comprise a local IP connection between the local application server 108a and the first IAB node 104a. After the data traffic is processed in the local data network 108 i.e. in the local application server 108a, the selected part of the data traffic which may comprise a processed and/or pre-processed part of the user data, is transmitted in step 311, to the central application server 110. The selected part of the data traffic may be stored, further processed or used e.g. broadcasted by the central application server 110. This way the IAB network 100 according to the present disclosure provides the advantage of mitigating data traffic overload of the IAB network 100.

In various embodiments, the selected part of the data traffic destined for the central application server is transmitted via a data path which comprises a third data path comprising a backhaul communication link of the IAB network. The third data path in several embodiments is the IAB link connecting the gNB-DU of the IAD node 104a to the gNB-DU of a second network node of the IAB communication network 100. The second node may be the donor node 102 which is in wired communication with the core network 101. The gNB-DU of the donor node 102 is in communication with the central application server 110. The data path may further comprise a fourth data path comprising a wired IP connection between the gNB-DU of the donor node 102 and the central application server 110 as shown in figure 1.

In several embodiments the data traffic transmitted by the UE may comprises a user data of the UE. In other embodiments the data traffic may further comprise UE information. The UE information in some other embodiments may be transmitted to several nodes in the communication network independently of the user data e.g. in different protocol data unit, PDU, sessions or using separate network slices. The information provided by the UE in some embodiments comprises the subscription information of the UE. Based on this information, the core network 101 can check the policies valid for the UE subscription such as the ability of the UE 106 to handle local breakouts or otherwise referred to as special edge services. The UE may also provide a list of requested PDU sessions and possibly a list of requested network slice(s). In some embodiments the UE information may further comprise at least one of UE type, and/or UE identifier, and/or UE location information. Such information may be comprised in the data traffic or transmitted separately.

In several aspects the requirement for the local breakout is determined based on the information transmitted by the UE. for example, the UE specific subscriber profile together with the requested type of service and/or flow-based information (e.g. an identification of the flow or slice by a slice or flow ID), which may be indicated by a network slice, or possibly a certain access point name (APN), allows the core network 101 (e.g. the session management function, SMF) to select a proper UPF. If the UE data meets the requirement, the remote/local UPF 108c is selected and data traffic will be forwarded to the local application server 108a. Moreover, either using the UE information or type of service or flow-based information, the CU-UP is also selected. The selected CU-UP may be a central CU-UP of the donor node 102 or a remote/local CU-UP 108b of the local data network 108.

The core network architecture may allow the external applications to control this behaviour, i.e. set up/up-date the rules for selection of the data path. This means that the central application server 110 may in some aspects decide the selection of the central or local UPF and/or CU-UP and control the local breakout for certain UEs and certain data traffic.

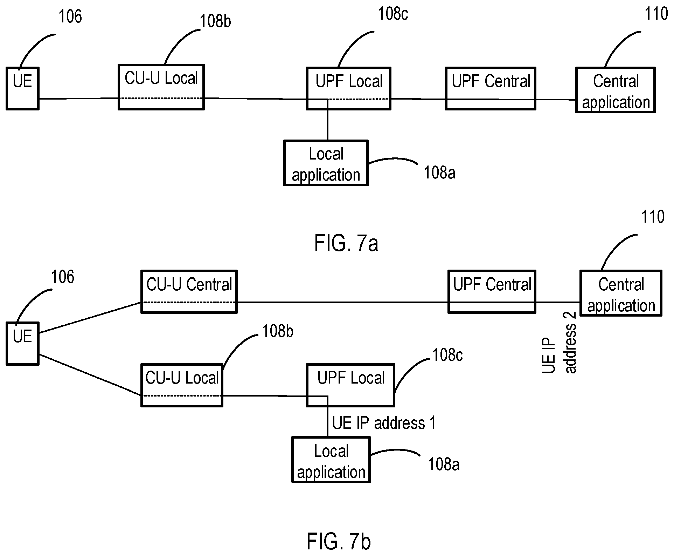

In some aspects, one PDU session may be used which provides concurrent access for the UEs to both local and central data networks. As shown in figure 7a, depending on e.g. the quality of service, QoS, flow in the PDU session, the remote UPF 108c either forwards the data traffic to the central UPF for termination in the central application server 110 (for data traffic not meeting the requirement for local breakout/edge service) or terminates it locally with distributing it to the local application server 108a. (For data traffic which meets the requirement for local breakout/edge services)

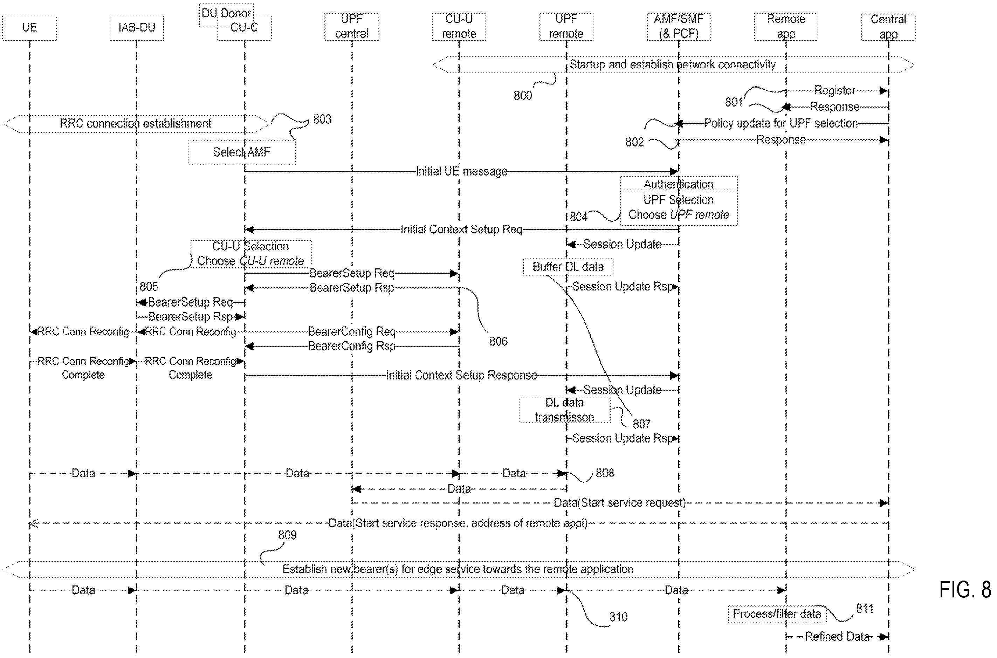

Detailed fundamentals of selecting one or more PDU sessions can e.g. be found in 3GPP TS 23.501 V16.1.0, System Architecture for the 5G System. This will be further discussed below with reference to the sequence diagram of figure 8.

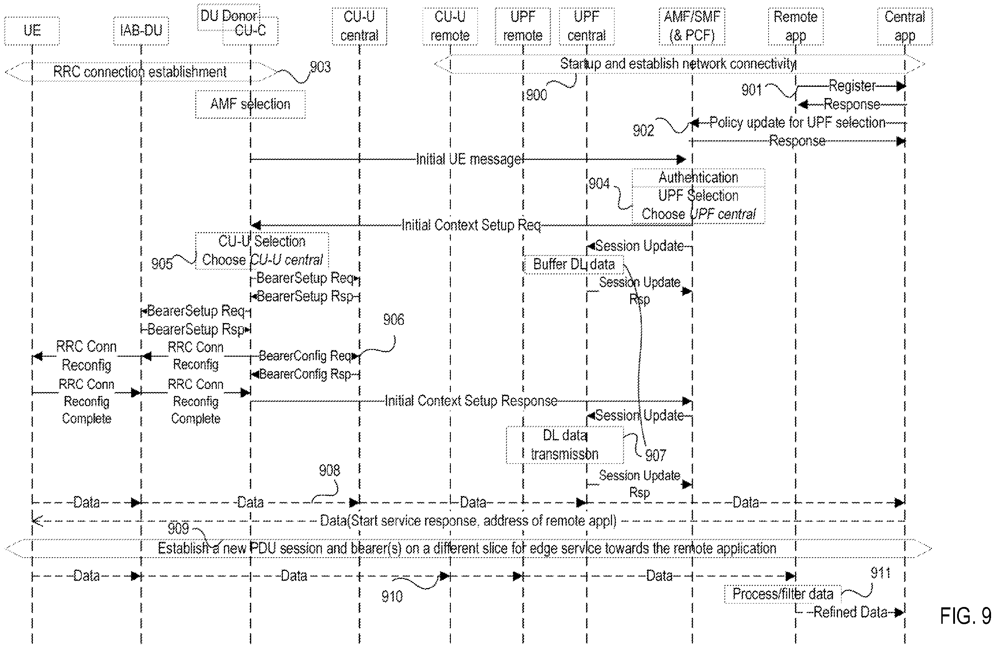

Alternatively or additionally, multiple PDU sessions e.g. two PDU sessions may be used to control the selection of the data traffic path as shown in figure 7b. In these aspects, different PDU sessions are used for the remote UPF and central UPF. The two PDU sessions may be part of different slices. This means that based on the UE information the data traffic meeting the requirement for local breakout is transported in a PDU session with a first network slice ID and the data traffic not meeting the requirement for the local breakout is transported using a PDU with a different slice ID. This has been shown and explained in more detail with reference to the sequence diagram of figure 9 further on.

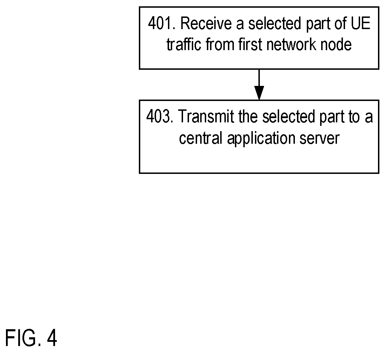

According to another aspect of the present disclosure there is provided a method with reference to figure 4, which method is not part of the present invention. Figure 4 shows a flowchart of a method in a second network node of an IAB network for a local breakout. The IAB network may be the IAB network 100 described above with respect to figures 1 and 2. The second network node may be the IAB donor node 102 of figure 1 or any other selected and suitable IAB node 104 in the IAB network 100. As mentioned earlier the IAB donor node 102 is in communication with the IAB nodes 104 of the IAB network 100, for example connected to the first IAB node 104a. The IAB network 100 has a split-structure and the IAB donor node 102 comprises a CU-CP, and at least one CU-UP, wherein the CU-CP is separated from the CU-UP and wherein the donor node 102 further comprises at least one gNB-DU.

The method performed in the donor node 102 of the IAB network 100 comprises in step 401 receiving from the first IAB node 104a, the selected part of the data traffic transmitted by one or more UEs 106 , destined for the central application server 110 having the second network address and being in communication with the core network 101. In step 403 the selected part of the data traffic of the UE is transmitted to the central application server 110.

All features, entities, equipments and advantages described in the previous aspects of the present invention such as the method performed in the first IAB node 104a and described with reference to figures 1-3 are also applicable herein. For example, the data traffic transmitted by the UE comprises a user data of the UE and the selected part of the data traffic comprises a processed part of the user data, processed by the local application server 108a of the local data network 108.

The first IAB node 104a forwards the UE data traffic to the local data network 108 via a first data path and receives the selected part of the data traffic from the local application server 108a via a second data path as described with reference to figures 1 and 3.

The first IAB node 104a then transfers the selected part of the data traffic to the IAB donor node 102 via a data path (here a third data path) comprising the IAB communication link(s) of the IAB network 100. The selected part of the data traffic may be transferred to a gNB-DU of the IAB donor node 102. The IAB donor node 102 is in wired communication with the core network 101 and the gNB-DU of the donor node 102 is in wired physical IP communication with the central application server 110. This way the gNB-DU of the donor node 102 forwards the selected part of the data traffic to the central application sever 110 via another data path (here a fourth data path) comprising the wired IP connection between the gNB-DU of donor node 102 and the central application server 110 as also shown in figure 1.

Moving on, according to a third aspect there is provided a method performed in the central application server in communication with an IAB network and a core network, which method is not part of the present invention. The IAB network, the core network and the central application server may be the IAB network 100, core network 101 and the central application server 110 as described above with reference to figure 1. Similarly, all features, entities, equipments and advantages described in the previous aspects of the present invention such as the method performed in the first IAB node 104a and the method performed in the donor node 102 are also applicable herein.

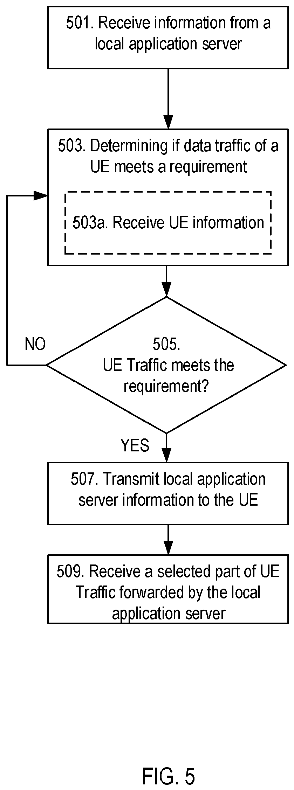

Figure 5 shows a flowchart of the method according to the third aspect. The method comprises in step 501 receiving an information from the local application server 108a of the local data network 108, which is in communication with the first IAB node 104a of the IAB network 100. In several embodiments, the information received from the local application server 108a may comprise a first network address of the local application server and/or a geographical location information of the local application server. The first network address may be an IP address. In step 503 the central application server determines if the data traffic transmitted by the UEs 106 meets a requirement for a local breakout from the first IAB node 104a.

In several embodiments determining if the data traffic transmitted by the UE meets the requirement for the local breakout from the first IAB node 104a may be based on information transmitted by the UE. The information provided by the UE in some embodiments may comprise the subscription information of the UE. Based on this information, the core network 101 can check the policies valid for the UE subscription such as the ability of the UE 106 to handle local breakouts or otherwise referred to as special edge services. The UE may also provide a list of requested PDU sessions and possibly a list of requested network slice(s). In some embodiments the UE information may further comprise at least one of UE type, and/or UE identifier, and/or UE location information. UE information may be comprised in the UE data traffic or transmitted separately.

In several embodiments determining if the data traffic transmitted by the UE meets the requirement for the local breakout from the first IAB node 104a may be based on an indication or determination received from the core network 101. The core network 101 may forward such indication to the central application server 110. In other embodiments the core network 101 makes such determination based on traffic filter rules included in the core network 101 feature set as described with reference to figures 8 and 9.

The step 503 in some embodiments may comprise step 503a of receiving the information transmitted by the UE. The UE may find the network address to the central application server 110 via a name server or any other known technology.

In step 505 if the UE data traffic meets the requirement for the local breakout then the method comprises in step 507, transmitting to the UE, the information received from the local application server of the local data network and receiving in step 509, a selected part of the data traffic forwarded by the local application server 108a.

The IAB donor node 102 is in wired communication with the core network 101 and the gNB-DU of the donor node 102 is in wired physical IP communication with the central application server 110. This way the gNB-DU of the donor node 102 forwards the selected part of the data traffic to the central application server 110 over a fourth data path comprising the wired IP connection between the gNB-DU of donor node 102 and the central application server 110 as also shown in figure 1.

In yet another aspect of the present invention, there is provided a method performed in a local application server of a local data network having a first network address. The local application server is in communication with a first network node of an IAB communication network. The local application server may be comprised in a local data network and be in communication with several other components and entities. In several embodiments, the local application server is in communication with a central application server and/or a core network. The local application server may be the local application server 108a of the local data network 108 described earlier. All features, entities, equipments and advantages described in the previous aspects of the present invention such as the method performed in the first IAB node 104a, the donor node 102 and the central application server 110 described with reference to figures 1-5 are also applicable herein.

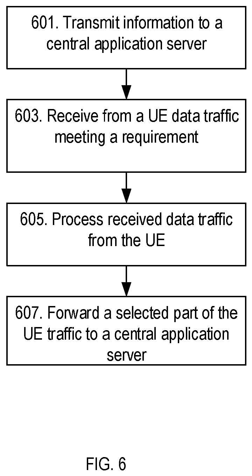

Figure 6 shows a flowchart of the method in the local application server 108a. The method comprises in step 601 transmitting, to the central application server 110 having a second network address and being in communication with the core network 101, information of the local application server 108a. The information transmitted by the local application server 108a may comprise the first network address of the local application server and/or a geographical location information of the local application server. The first network address may be an IP address.

In several embodiments the remote 108a and the central applications 110 are connected via an IP connection and the information of the local application server is transmitted to the central application server over an IAB communication link.

In step 603, data traffic transmitted by the UEs 106 is received. This data traffic has been determined by the central application server and/or the core network to meet a requirement for a local breakout the first IAB node 104. The data traffic transmitted by the UEs comprises a user data of the UEs.

The data traffic transmitted by one or more UEs 106 is received via a first data path. The first data path may comprise a F1-UP interface. In step 605 the method comprises processing the received data traffic and forming a selected part of the data traffic based on the processing. The step of processing may comprise pre-processing of data, extracting parts of the user data, electing parts of the data for further processing in the central application server while discarding other parts of the data traffic, changing size or format of the data, compression or prioritization of data traffic, filtering or merging the data and the like.

After the data is processed, the selected part of the data traffic will be forwarded 607 to the central application server. The selected part of the data traffic destined for the central application may be forwarded to the central application server via a data path, wherein the data path comprises a second data path comprising a local IP connection between the local application server and the first IAB node 104a. In several embodiments the data path also comprises the third data path and the fourth data path as explained earlier.

Figure 8 illustrates a sequence diagram when a single PDU session is used according to several embodiments of the present invention. In brief, the selection and reselection of the UPF and the SMF is responsible for this (re)selection using several parameters and policies. Within the 5G CN, the Policy Control Function (PCF) is responsible for the policy framework and it provides an interface to application functions (AF) to enable application controlled 5GC behaviour. Thus, the AFs may send requests to influence SMF routing decisions for traffic of PDU Session. The AF requests may influence UPF (re)selection and allow routing user traffic to a local data network. As mentioned above, the UPF selection is performed by the SMF by considering UPF deployment scenarios such as centrally located UPF and distributed/local UPF located close to or at the access network site i.e. IAB nodes 104. The selection of the UPF shall also enable deployment of UPF with different capabilities. According to the above described principles with reference to steps in figure 8 when a single PDU session is used, the remote/local functions (CU-UP, UPF and local application) and the central application start up and establish network connectivity in step 800. The remote application 108a notifies its presence in step 801 to the central application 110. An IP address as well as e.g. geographical location information of the local application 108a is provided to the central application 110. In step 802 the central application 110 updates the SMF of 5G CN with information for how to select UPF for devices/UEs using the remote application. In step 803 UEs 106 establish connection e.g. via RRC and the CU-CP selects the AMF based on UE information (e.g. UE subscription profile). The UE 106 is authenticated in step 804 and UPF is selected according to the configured policies in step 802. AMF/SMF provides traffic filter rules to the remote UPF 108c. The CU-CP will select in step 805 the remote/local CU-UP 108b based on UE information. In step 806 data bearers are setup. In some embodiments if there is any previously buffered data for the UEs 106 which have established connection, it may be forwarded downlink towards the UEs 106 in step 807. In step 808 the UE 106 finds the network address to the central application 110 (e.g. hard coded or via a name server) and requests start of a service. The QoS flow used indicates when the data does not meet the requirement for the local breakout and the remote UPF forwards the UE message to the central UPF which then sends it to the destination i.e. the central application 110. The central application 110 acknowledges the service request and provides the network address to the remote application 108a. In step 809 new data bearers are setup for the purpose of the local breakout/edge service towards the local application. In step 810 the data traffic which meets the local breakout requirement is transmitted from the UE 106 using a new QoS flow. According to the traffic filter rules in UPF, this QoS flow terminates in the remote UPF 108c for forwarding to the remote application server 108a. The remote application 108a in step 811 processes and/or filters the data and forwards the selected/refined part of the data traffic to the central application 110.

With reference to figure 9 a sequence diagram when using two PDU sessions in accordance with several embodiments of the present invention is described. Similar to the scenario of single PDU described in fig-ure 8, here also the remote/local functions (CU-UP, UPF and local application) and the central application start up and establish network connectivity in step 900. The remote application 108a notifies its presence in step 901 to the central application 110. An IP address as well as e.g. geographical location information of the local application 108a is provided to the central application 110. In step 902 the central application 110 updates the SMF of 5G CN with information for how to select UPF for devices/UEs using the remote application. In step 903 the UEs 106 will connect to the network e.g. by establishing RRC connection. The UE subscriber identification module (SIM) may indicate service/slice-specific information which is used by the CU-CP for selection of suitable AMF. The AMF/SMF based on the service/slice information and/or IP addresses, select in step 904 the UPF which in this case is the central UPF. In step 905 the CU-CP will select the remote CU-UP based on UE service/slice information. Data bearers are setup in step 906. In some embodiments if there is any previously buffered data for the UEs 106 which have established connection, it may be forwarded downlink towards the UEs 106 in step 907. The UE 106 finds the address to the central application 110 in step 908 (e.g. hard coded or via a name server) and requests start of a service. The central UPF is used, as this slice for the data traffic which does not meet the requirement for the local breakout. The central application 110 acknowledges the service request and provides the address to the remote application 108a. In step 909 a new PDU session using a different slice ID is established (similar to steps 904-906). This new PDU session is towards the remote application 108a for the edge services for the data which meets the requirement for the local breakout. In step 910 data traffic meeting the requirement for local breakout is transmitted from the UE 106 using a new slice ID which terminates in the remote UPF 108c for forwarding to the local data network 108 i.e. the remote application server 108a. In step 911, the remote application server 108a processes and/or filters the data and forwards the selected and/or refined part of the data traffic to the central application server 110.

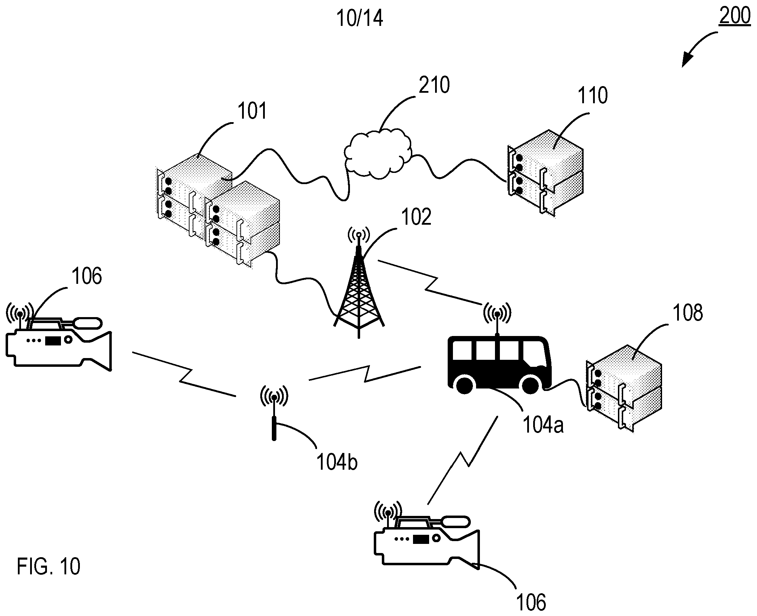

According to one example, a communication network 200 including the IAB network 100 is shown in figure 10 where the local breakout via suitable IAB nodes 104 of the IAB network 100 is applied to a live video broadcast production. In a typical scenario, several cameras can be used during e.g. a sport event and a mixing of which cameras is handled in a semi-mobile production and mixing van (also named Outside Broadcast OB-van) that is placed in the close vicinity to the event. With the introduction of 5G with new wide carriers, an interest exists to utilize NR as the transmission technology for this type of applications. The expected larger bandwidth available for NR compared to LTE (e.g. by using mm Wave spectrum) along with the native deployment of massive MIMO (multi input-multi output) or multi-beam systems in NR creates an opportunity to develop and deploy IAB links. This means that the same spectrum and radio access technology is used both in the wireless backhaul link and in the access link between access nodes and UEs. An important demand for the live production is low latency from the recording cameras to the mixing van. This demand is typically around 100 ms to admit efficient live editing. The conventional deployment of equipment has proven to cause issues to fulfil such stringent latency demands. By using the IAB network 100 and connecting the local breakout directly to the IAB node the latency of the communication network would be improved dramatically.

To perform the live video broadcast production according to this example, one or more UEs 106 such as recording devices e.g. cameras, a semi-mobile production and mixing van 104a and a broadcasting centre 110 from where the recorded and mixed productions are broadcasted are provided. Various nodes and components included in the communication network 200 carrying out this example are thus configured to perform the methods and functions described herein such as the embodiments of the methods according to several aspects of the present disclosure described above.

The advantage is taken by using the local breakout and the RAN IAB network 100 of this disclosure for transmission of bandwidth-demanding camera recording video traffic. This way the video data UL traffic is transmitted to the mixing van 104a within the demanded short latency and the output from the mixing van is e.g. via wired or wireless connections and/or internet infrastructure 210 provided to the broadcasting center 110. In industrial applications or live TV broadcasts, a major part the data traffic might be discarded and never used, e.g. only one or a few camera angles may be selected at a certain time. Thus, it would be beneficial to filter, process and/or pre-process the video data as early as possible and relieve the load for the most critical backhaul links.

It should be appreciated that in the embodiments of the present invention, the processing and/or pre-processing may be distributed to the local breakout 108 and only selected parts of the video data forwarded in the hop chain of the IAB network 100. As mentioned earlier, the IP connectivity to each IAB node makes it possible to deploy the necessary functionality at the selected IAB node(s). This includes deployment of the local data network 108 and allocation of a CU-UP at the same site as the IAB-node 104a (e.g. mixing van). This CU-UP becomes a part of the gNB donor 102 and has an E1 interface to the CU-CP of the donor node 102. Additionally, a UPF part of the core network 101 is also allocated at the same site which allows to collocate application-specific software for handling video data. Thus, at the mixing van comprising the first IAB node 104a in the hop chain the donor CU-UP 108b, UPF 108c and the remote application server 108a such as a remote live TV broadcast centre are deployed. Devices 106 connected to the selected IAB node 104a as well as devices further down the hop chain e.g. connected to another IAB node 104b, will connect to the remote application server 108a which can process/filter the received video data traffic and forward the selected parts to the central application server 110. This will prevent the first IAB communication link (i.e. the IAB link between the first IAB node 104a and the donor node 102) from becoming congested in the event of heavy video traffic.

Moving on, figures 11-14 show schematic block diagrams of network entities according to several embodiments of the present disclosure. The network entities may also be referred to as network nodes. The network nodes may be operably arranged to be connected to several other network nodes and/or network entities. The network entities in figures 11-14 show the block diagrams of the first network node 104 e.g. the first IAB node 104a, the second network node e.g. the IAB donor node 102, the local application server 108a and the central application server 110. According to embodiments, the network entities 102, 104, 108a, 110 may comprise communication interfaces 300, a processing circuitry 400 and a memory 500 as described earlier in the context of this disclosure with respect to several embodiments. The network entities are thus operable to execute any of the method steps described in various aspects and embodiments of the present disclosure.

In another embodiment, there is provided a computer program product comprising a computer readable medium, the computer readable medium having computer readable code embodied therein, the computer readable code being configured such that, on execution by a suitable computer or processor, the computer or processor is caused to perform any of the embodiments of methods described herein, such as embodiments of the methods described above with respect to figures 1 to 10.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for a local breakout, performed by a first network node of an integrated access and backhaul, IAB, network being in communication with a core network, the method being **characterized by** comprising:
- Providing (301) a network connection between said first network node and a local data network having a first network address;
- Receiving (303) a data traffic, transmitted by a user equipment, UE (106), the data traffic destined for a central application server (110) having a second network address and being in communication with said core network;
- and if said data traffic meets a requirement (305) for the local breakout from said first network node:
- Forwarding (307), said data traffic to a local application server (108a) of the local data network;
- Receiving (309), from said local application server (108a) of the local data network, a selected part of said data traffic destined for the central application server (110), the selected part of said data traffic having been processed and formed by said local application server (108a) of the local data network; and
- Transmitting (311), the selected part of said data traffic to the central application server (110), thereby mitigating data traffic overload of the IAB network.

2. The method according to claim 1, wherein said data traffic transmitted by the UE (106) comprises a user data of the UE (106) and wherein said selected part of the data traffic comprises a processed part of the user data, processed by the local application server (108a) of the local data network.

3. The method according to claims 1 or 2, wherein said requirement is determined based on an information transmitted by the UE (106) which comprises at least one of UE type, UE identifier, UE subscription profile, UE location information.

4. The method according to claims 1 to 3, wherein said first network address and said second network address are internet protocol, IP, addresses and wherein said local application server (108a) having said first IP address has an IP connection to said central application server (110) having said second IP address, and wherein said IP connection is tunnelled over a backhaul communication link of the IAB network.

5. The method according to any of the preceding claims, wherein said data traffic is forwarded to the local application server (108a) via a first data path, and wherein the selected part of said data traffic, received from the local application server (108a), is received via a second data path, and wherein the selected part of said data traffic destined for the central application server (110) is transmitted to the central application server (110) via a data path comprising a third data path.

6. A method performed by a local application server of a local data network having a first network address, the local application server being in communication with a first network node of an integrated and backhaul, IAB, communication network, the method being **characterized by** comprising:
- Transmitting (601), to a central application server having a second network address and being in communication with a core network, an information of the local application server;
- Receiving (603), via said first network node, a data traffic, transmitted by a user equipment, UE, wherein said data traffic meets a requirement for a local breakout from said first network node;
- Processing (605) said received data traffic and forming a selected part of said data traffic based on said processing;
- Forwarding (607), via said first network node, the selected part of said data traffic destined for the central application server to said central application server.

7. A first network node (104) of an integrated access and backhaul, IAB, network (100) being in communication with a core network (101), the first network node being **characterized by** comprising:
- a memory comprising instruction data representing a set of instructions; and processing circuitry configured to communicate with the memory and to execute the set of instructions, the processing circuitry being operable to:
- Establish a network connection between said first network node (104, 104a) and a local data network (108) having a first network address;
- Receive a data traffic, transmitted by a user equipment, UE (106), the data traffic destined for a central application server (110) having a second network address and being in communication with said core network;
said processing circuitry further configured to if said data traffic meets a requirement for a local breakout from said first network node:
- Forward, said data traffic to a local application server (108a) of the local data network (108);
- Receive, from said local application server (108a) of the local data network (108), a selected part of said data traffic destined for the central application server (110), the selected part of said data traffic having been processed and formed by said local application server (108a) of the local data network (108); and
- Transmit, the selected part of said data traffic to the central application server (110).

8. A local application server (108a) of a local data network (108) having a first network address, the local application server (108a) being in communication with a first network node (104, 104a) of an integrated and backhaul, IAB, communication network (100), the local application server (108a) being **characterized by** comprising:
- a memory comprising instruction data representing a set of instructions; and processing circuitry configured to communicate with the memory and to execute the set of instructions, the processing circuitry being operable to:
- Transmit, to a central application server (110) having a second network address and being in communication with a core network (101), an information of the local application server (108a);
- Receive, via said first network node, a data traffic, transmitted by a user equipment, UE (106), wherein said data traffic meets a requirement for a local breakout from said first network node;
- Process said received data traffic and form a selected part of said data traffic based on said processing;
- Forward, via said first network node, the selected part of said data traffic destined for the central application server (110) to said central application server (110).

## Patentansprüche

1. Verfahren für einen lokalen Breakout, das von einem ersten Netzwerkknoten eines Integrated Access and Backhaul-Netzwerks, IAB-Netzwerks, durchgeführt wird, das mit einem Kernnetzwerk in Kommunikation ist, wobei das Verfahren **dadurch gekennzeichnet ist, dass** es Folgendes umfasst:
- Bereitstellen (301) einer Netzwerkverbindung zwischen dem ersten Netzwerkknoten und einem lokalen Datennetzwerk mit einer ersten Netzwerkadresse;
- Empfangen (303) eines Datenverkehrs, der von einer Benutzereinrichtung, UE, (106) gesendet wird, wobei der Datenverkehr für einen zentralen Anwendungsserver (110) bestimmt ist, der eine zweite Netzwerkadresse aufweist und mit dem Kernnetzwerk in Kommunikation ist;
- und, falls der Datenverkehr eine Anforderung (305) für den lokalen Breakout von dem ersten Netzwerkknoten erfüllt:
- Weiterleiten (307) des Datenverkehrs an einen lokalen Anwendungsserver (108a) des lokalen Datennetzwerks;
- Empfangen (309) eines ausgewählten Teils des Datenverkehrs, der für den zentralen Anwendungsserver (110) bestimmt ist, von dem lokalen Anwendungsserver (108a) des lokalen Datennetzwerks, wobei der ausgewählte Teil des Datenverkehrs von dem lokalen Anwendungsserver (108a) des lokalen Datennetzwerks verarbeitet und gebildet wurde; und
- Senden (311) des ausgewählten Teils des Datenverkehrs an den zentralen Anwendungsserver (110), um dadurch Datenverkehrsüberlastung des IAB-Netzwerks zu mindern.

2. Verfahren nach Anspruch 1, wobei der von der UE (106) gesendete Datenverkehr Benutzerdaten der UE (106) umfasst und wobei der ausgewählte Teil des Datenverkehrs einen verarbeiteten Teil der Benutzerdaten umfasst, der von dem lokalen Anwendungsserver (108a) des lokalen Datennetzwerks verarbeitet wurde.

3. Verfahren nach Anspruch 1 oder 2, wobei die Anforderung basierend auf einer Information bestimmt wird, die von der UE (106) gesendet wird und die mindestens eines von einem UE-Typ, einer UE-Kennung, einem UE-Abonnementprofil und einer UE-Standortinformation umfasst.

4. Verfahren nach Anspruch 1 bis 3, wobei die erste Netzwerkadresse und die zweite Netzwerkadresse Internetprotokolladressen, IP-Adressen, sind und wobei der lokale Anwendungsserver (108a) mit der ersten IP-Adresse eine IP-Verbindung mit dem zentralen Anwendungsserver (110) mit der zweiten IP-Adresse aufweist und wobei die IP-Verbindung über eine Backhaul-Kommunikationsverbindung des IAB-Netzwerks getunnelt wird.

5. Verfahren nach einem der vorhergehenden Ansprüche, wobei der Datenverkehr über einen ersten Datenpfad an den lokalen Anwendungsserver (108a) weitergeleitet wird und wobei der ausgewählte Teil des Datenverkehrs, der von dem lokalen Anwendungsserver (108a) empfangen wird, über einen zweiten Datenpfad empfangen wird, und wobei der ausgewählte Teil des für den zentralen Anwendungsserver (110) bestimmten Datenverkehrs über einen Datenpfad, der einen dritten Datenpfad umfasst, an den zentralen Anwendungsserver (110) gesendet wird.

6. Verfahren, das von einem lokalen Anwendungsserver eines lokalen Datennetzwerks mit einer ersten Netzwerkadresse durchgeführt wird, wobei der lokale Anwendungsserver mit einem ersten Netzwerkknoten eines Integrated Access and Backhaul-Netzwerks, IAB-Netzwerks, in Kommunikation ist, wobei das Verfahren **dadurch gekennzeichnet ist, dass** es Folgendes umfasst:
- Senden (601) einer Information des lokalen Anwendungsservers an einen zentralen Anwendungsserver, der eine zweite Netzwerkadresse aufweist und mit einem Kernnetzwerk in Kommunikation ist;
- Empfangen (603) eines Datenverkehrs, der von einer Benutzereinrichtung, UE, gesendet wird, über den ersten Netzwerkknoten, wobei der Datenverkehr eine Anforderung für einen lokalen Breakout von dem ersten Netzwerkknoten erfüllt;
- Verarbeiten (605) des empfangenen Datenverkehrs und Bilden eines ausgewählten Teils des Datenverkehrs basierend auf dem Verarbeiten;
- Weiterleiten (607) des ausgewählten Teils des Datenverkehrs, der für den zentralen Anwendungsserver bestimmt ist, über den ersten Netzwerkknoten an den zentralen Anwendungsserver.

7. Erster Netzwerkknoten (104) eines Integrated Access and Backhaul-Netzwerks, IAB-Netzwerk, (100), das mit einem Kernnetzwerk (101) in Kommunikation ist, wobei der erste Netzwerkknoten **dadurch gekennzeichnet ist, dass** er Folgendes umfasst:
- einen Speicher, der Anweisungsdaten umfasst, die einen Satz von Anweisungen darstellen, und Verarbeitungsschaltungsanordnung, die dazu konfiguriert ist, mit dem Speicher zu kommunizieren und den Satz von Anweisungen auszuführen, wodurch die Verarbeitungsschaltungsanordnung zu Folgendem ausgelegt ist:
- Herstellen einer Netzwerkverbindung zwischen dem ersten Netzwerkknoten (104, 104a) und einem lokalen Datennetzwerk (108) mit einer ersten Netzwerkadresse;
- Empfangen eines Datenverkehrs, der von einer Benutzereinrichtung, UE, (106) gesendet wird, wobei der Datenverkehr für einen zentralen Anwendungsserver (110) bestimmt ist, der eine zweite Netzwerkadresse aufweist und mit dem Kernnetzwerk in Kommunikation ist;
wobei die Verarbeitungsschaltungsanordnung, falls der Datenverkehr eine Anforderung für einen lokalen Breakout von dem ersten Netzwerkknoten erfüllt, ferner zu Folgendem konfiguriert ist:
- Weiterleiten des Datenverkehrs an einen lokalen Anwendungsserver (108a) des lokalen Datennetzwerks (108);
- Empfangen eines ausgewählten Teils des Datenverkehrs, der für den zentralen Anwendungsserver (110) bestimmt ist, von dem lokalen Anwendungsserver (108a) des lokalen Datennetzwerks (108), wobei der ausgewählte Teil des Datenverkehrs von dem lokalen Anwendungsserver (108a) des lokalen Datennetzwerks (108) verarbeitet und gebildet wurde; und
- Senden des ausgewählten Teils des Datenverkehrs an den zentralen Anwendungsserver (110).

8. Lokaler Anwendungsserver (108a) eines lokalen Datennetzwerks (108) mit einer ersten Netzwerkadresse, wobei der lokale Anwendungsserver (108a) mit einem ersten Netzwerkknoten (104, 104a) eines Integrated Access and Backhaul-Netzwerks, IAB-Netzwerks, (100) in Kommunikation ist, wobei der lokale Anwendungsserver (108a) **dadurch gekennzeichnet ist, dass** er Folgendes umfasst:
- einen Speicher, der Anweisungsdaten umfasst, die einen Satz von Anweisungen darstellen, und Verarbeitungsschaltungsanordnung, die dazu konfiguriert ist, mit dem Speicher zu kommunizieren und den Satz von Anweisungen auszuführen, wodurch die Verarbeitungsschaltungsanordnung zu Folgendem ausgelegt ist:
- Senden einer Information des lokalen Anwendungsservers (108a) an einen zentralen Anwendungsserver (110), der eine zweite Netzwerkadresse aufweist und mit einem Kernnetzwerk (101) in Kommunikation ist;
- Empfangen eines Datenverkehrs, der von einer Benutzereinrichtung, UE, (106) gesendet wird, über den ersten Netzwerkknoten, wobei der Datenverkehr eine Anforderung für einen lokalen Breakout von dem ersten Netzwerkknoten erfüllt;
- Verarbeiten des empfangenen Datenverkehrs und Bilden eines ausgewählten Teils des Datenverkehrs basierend auf dem Verarbeiten;
- Weiterleiten des ausgewählten Teils des Datenverkehrs, der für den zentralen Anwendungsserver (110) bestimmt ist, über den ersten Netzwerkknoten an den zentralen Anwendungsserver (110).

## Revendications

1. Procédé pour une dérivation locale, réalisé par un premier nœud de réseau d'un réseau de liaison terrestre à accès intégré, IAB, étant en communication avec un réseau central, le procédé étant **caractérisé en ce qu'**il comprend :
- la fourniture (301) d'une connexion de réseau entre ledit premier nœud de réseau et un réseau de données local présentant une première adresse de réseau ;
- la réception (303) d'un trafic de données, transmis par un équipement utilisateur, UE (106), le trafic de données étant destiné à un serveur d'application central (110) présentant une deuxième adresse de réseau et étant en communication avec ledit réseau central ;
- et si ledit trafic de données remplit une exigence (305) pour la dérivation locale à partir dudit premier nœud de réseau :
- le transfert (307) dudit trafic de données à un serveur d'application local (108a) du réseau de données local ;
- la réception (309), depuis ledit serveur d'application local (108a) du réseau de données local, d'une partie sélectionnée dudit trafic de données destinée au serveur d'application central (110), la partie sélectionnée dudit trafic de données ayant été traitée et formée par ledit serveur d'application local (108a) du réseau de données local ; et
- la transmission (311) de la partie sélectionnée dudit trafic de données au serveur d'application central (110), atténuant ainsi une surcharge de trafic de données du réseau IAB.

2. Procédé selon la revendication 1, dans lequel ledit trafic de données transmis par l'UE (106) comprend des données utilisateur de l'UE (106) et dans lequel ladite partie sélectionnée du trafic de données comprend une partie traitée des données utilisateur, traitée par le serveur d'application local (108a) du réseau de données local.

3. Procédé selon la revendication 1 ou 2, dans lequel ladite exigence est déterminée sur la base d'une information transmise par l'UE (106) qui comprend au moins l'un parmi un type d'UE, un identifiant d'UE, un profil d'abonnement d'UE, et des informations d'emplacement d'UE.

4. Procédé selon les revendications 1 à 3, dans lequel ladite première adresse de réseau et ladite deuxième adresse de réseau sont des adresses de protocole Internet, IP, et dans lequel ledit serveur d'application local (108a) présentant ladite première adresse IP présente une connexion IP audit serveur d'application central (110) présentant ladite deuxième adresse IP, et dans lequel ladite connexion IP est tunnelisée sur une liaison terrestre de communication du réseau IAB.

5. Procédé selon l'une quelconque des revendications précédentes, dans lequel ledit trafic de données est transféré au serveur d'application local (108a) via un premier trajet de données, et dans lequel la partie sélectionnée dudit trafic de données, reçue depuis le serveur d'application local (108a), est reçue via un deuxième trajet de données, et dans lequel la partie sélectionnée dudit trafic de données destinée au serveur d'application central (110) est transmise au serveur d'application central (110) via un trajet de données comprenant un troisième trajet de données.

6. Procédé réalisé par un serveur d'application local d'un réseau de données local présentant une première adresse de réseau, le serveur d'application local étant en communication avec un premier nœud de réseau d'un réseau de communication de liaison terrestre à accès intégré, IAB, le procédé étant **caractérisé en ce qu'**il comprend :
- la transmission (601), à un serveur d'application central présentant une deuxième adresse de réseau et étant en communication avec un réseau central, d'une information du serveur d'application local ;
- la réception (603), via ledit premier nœud de réseau, d'un trafic de données, transmis par un équipement utilisateur, UE, dans lequel ledit trafic de données remplit une exigence pour une dérivation locale à partir dudit premier nœud de réseau ;
- le traitement (605) dudit trafic de données reçu et la formation d'une partie sélectionnée dudit trafic de données sur la base dudit traitement ;
- le transfert (607), via ledit premier nœud de réseau, de la partie sélectionnée dudit trafic de donnée destinée au serveur d'application central audit serveur d'application central.

7. Premier nœud de réseau (104) d'un réseau de liaison terrestre à accès intégré, IAB, (100) étant en communication avec un réseau central (101), le premier nœud de réseau étant **caractérisé en ce qu'**il comprend :
- une mémoire comprenant des données d'instruction représentant un ensemble d'instructions ; et une circuiterie de traitement configurée pour communiquer avec la mémoire et pour exécuter l'ensemble d'instructions, la circuiterie de traitement étant exploitable pour :
- établir une connexion de réseau entre ledit premier nœud de réseau (104, 104a) et un réseau de données local (108) présentant une première adresse de réseau ;
- recevoir un trafic de données, transmis par un équipement utilisateur, UE (106), le trafic de données étant destiné à un serveur d'application central (110) présentant une deuxième adresse de réseau et étant en communication avec ledit réseau central ;
ladite circuiterie de traitement étant en outre configurée pour, si ledit trafic de données remplit une exigence pour une dérivation locale à partir dudit premier nœud de réseau :
- transférer ledit trafic de données à un serveur d'application local (108a) du réseau de données local (108) ;
- recevoir, depuis ledit serveur d'application local (108a) du réseau de données local (108), une partie sélectionnée dudit trafic de données destinée au serveur d'application central (110), la partie sélectionnée dudit trafic de données ayant été traitée et formée par ledit serveur d'application local (108a) du réseau de données local (108) ; et
- transmettre la partie sélectionnée dudit trafic de données au serveur d'application central (110).

8. Serveur d'application local (108a) d'un réseau de données local (108) présentant une première adresse de réseau, le serveur d'application local (108a) étant en communication avec un premier nœud de réseau (104, 104a) d'un réseau de communication de liaison terrestre à accès intégré, IAB, (100), le serveur d'application local (108a) étant **caractérisé en ce qu'**il comprend :
- une mémoire comprenant des données d'instruction représentant un ensemble d'instructions ; et une circuiterie de traitement configurée pour communiquer avec la mémoire et pour exécuter l'ensemble d'instructions, la circuiterie de traitement étant exploitable pour :
- transmettre, à un serveur d'application central (110) présentant une deuxième adresse de réseau et étant en communication avec un réseau central (101), une information du serveur d'application local (108a) ;
- recevoir, via ledit premier nœud de réseau, un trafic de données, transmis par un équipement utilisateur, UE (106), dans lequel ledit trafic de données remplit une exigence pour une dérivation locale à partir dudit premier nœud de réseau ;
- traiter ledit trafic de données reçu et former une partie sélectionnée dudit trafic de données sur la base dudit traitement ;
- transférer, via ledit premier nœud de réseau, la partie sélectionnée dudit trafic de donnée destinée au serveur d'application central (110) audit serveur d'application central (110).
